# EUROPEAN PATENT APPLICATION

(11) **EP 1 727 132 A1**
(43) Date of publication of application: **29.11.2006**
(21) Application number: 06009470.3
(22) Date of filing: 08.05.2006
(51) Int. Cl.: G11B 5/40, G11B 5/39

(54) **Method, medium, and apparatus controlling domain characteristics of a magneto-resistive sensor**

(30) Priority: 26.05.2005 KR 2005044466
(71) Applicant: Samsung Electronics Co., Ltd., Suwon-si, Gyeonggi-Do (KR)
(72) Inventor: Yang, Won-choul, Yongin-si, Gyenggi-do (KR)
(74) Representative: Grünecker, Kinkeldey, Stockmair & Schwanhäusser Anwaltssozietät

(57) **Abstract**

A method, medium, and apparatus to control a domain characteristic of a magnetoresistive (MR) sensor, e.g., included in a head of an HDD. The method may include maintaining the head in a non-flying or unloaded state, applying temperature suitable for demagnetizing the MR sensor by driving a heater installed in the head, and cooling the MR sensor while applying a magnetic field for magnetizing the MR sensor. Accordingly, annealing can be performed in a fully assembled HDD by obtaining temperature suitable for annealing the MR sensor using a heater installed inside a head.

## Description

### CROSS-REFERENCE TO RELATED APPLICATIONS

This application claims the priority benefit of Korean Patent Application No. 10-2005-0044466, filed on May 26, 2005, in the Korean Intellectual Property Office, the disclosure of which is incorporated herein in its entirety by reference.

### BACKGROUND OF THE INVENTION

### 1. Field of the Invention

Embodiments of the present invention, at least as discussed herein, relate to a hard disk drive (HDD), and more particularly, to a method, medium, and apparatus controlling a domain characteristic of a magneto-resistive (MR) sensor included in a head of an HDD.

### 2. Description of the Related Art

Recently, high density hard disk drives (HDDs) have been developed, along with developments in head manufacturing technologies. Nowadays, an integrated head in which a write head and a read head are combined is primarily used in HDDs, and in particular, a magneto-resistive (MR) sensor is used as the read head.

MR sensors typically have a ferromagnetic material film formed of a nickel-steel alloy that has a magnetic-electric effect, with the ferromagnetic material film being formed on an electrically insulated substrate, for example. In a hard disk drive, a head operates best when an active area of the head does not have a magnetic region boundary. That is, the MR sensor should be in a single domain state. Magnetic region boundaries in the MR sensor cause Barkhausen noise, and this phenomenon is generated by an irreversible movement of a magnetic domain in a given magnetic field. If there is no magnetic region boundary, Barkhausen noise is not generated.

To maintain the MR sensor in a single domain state, the MR sensor should have a domain stability. However, the domain stability of the MR sensor deteriorates when the MR sensor is not in a single domain state. A single domain characteristic of the MR sensor may be established through imposition of magnetization when the MR sensor is constructed. Currently, considerable attention is necessary in the complete assembly process, including the remaining assembly process after the imposition of the magnetization, so that the MR sensor does not lose its single domain state or is not in a multi-domain state after the single domain state is established in the MR sensor.

An annealing method of establishing a single domain state of an MR sensor has been discussed in US Pat. No. 5,264,980, which sets forth a process of demagnetization by heating a ferromagnetic material film of the MR sensor to a temperature above the Neel temperature and then cooling the MR sensor while applying an extemal magnetic field for magnetizing of the MR sensor.

The alloy used for such a head becomes a paramagnetic substance at the Curie temperature of 750°F. For example, an exchange bias effect of a Fe-Mn half-ferromagnetic material having the magnetic-electric effect is removed above the Neel temperature of 410°K (around 100°C). Conventionally, an MR sensor is made to be in a single domain state after demagnetizing the MR sensor by increasing the temperature of the MR sensor to a temperature above the Neel temperature, using this effect, and then re-magnetizing the MR sensor.

However, with this conventional method, a high-temperature chamber is required to maintain the MR sensor at a temperature above the Neel temperature. In addition, conventionally, since a separate high-temperature chamber is desired for applying a single domain state to the MR sensor, separate from the chamber for any burn-in tests, there is a strong possibility of damaging HDDs due to contamination.

Further, since the MR sensor should be maintained at a higher temperature than the Neel temperature, it is difficult to perform a conventional domain characteristic improving methods for fully assembled HDDs, and thus such methods have been required to be performed only with a small-sized slider, a head gimbal assembly, or a head stack assembly.

Conventionally, the head is combined with an HDD by sequentially passing through an assembly process(s) such as the installing of the slider, head gimbal assembly, or the head stack assembly, with care to avoid interfering with the magnetization of the MR sensor. Regardless, while passing through these assembly processes, the single domain characteristic of the MR sensor deteriorates due to an electro-magnetic charge (EMC) and/or other stresses.

Further, the annealing in the slider, the head gimbal assembly, or the head stack assembly is commonly performed by parts suppliers rather than by HDD manufacturers. Thus, it is difficult to manage the domain characteristic of MR sensors in the HDD manufacturing process when assembling the parts.

Thus, there is a need for a method, medium, and apparatus to control the domain characteristic of an MR sensor in an HDD.

### SUMMARY OF THE INVENTION

Embodiments of the present invention provide, at least herein, a method, medium, and apparatus controlling a domain characteristic of a magneto-resistive (MR) sensor included in a head of a hard disk drive (HDD).

To achieve the above and/or other aspects and advantages, embodiments of the present invention include at least a method of controlling a domain characteristic of a magneto-resistive (MR) sensor included in a head for a hard disk drive (HDD), the method including applying heat to the MR sensor suitable for demagnetizing the MR sensor by driving a heater in the head, and cooling the MR sensor while applying a magnetic field for magnetizing the MR sensor.

The head may be installed in the HDD.

The head may altematively be separate from the HDD.

To achieve the above and/or other aspects and advantages, embodiments of the present invention include at least a method of controlling a domain characteristic of a magneto-resistive (MR) sensor included in a head within a hard disk drive (HDD), the method including applying heat to the MR sensor suitable for demagnetizing the MR sensor, and cooling the MR sensor while applying a magnetic field for magnetizing the MR sensor.

The method may further include preventing a cooling of the head by a disk in the HDD during the heating the MR sensor. Here, the cooling of the head may include maintaining the head in a non-flying state. The cooling of the head may include maintaining the disk below a speed that would prevent the application of heat to the MR sensor from demagnetizing the MR sensor. Further, the cooling of the head may include stopping rotation of the disk. In addition, the cooling of the head may include parking the head outside a circumference of the disk.

The head may also include a heater to perform the applying of heat to the MR sensor.

To achieve the above and/or other aspects and advantages, embodiments of the present invention include at least a hard disk drive (HDD), having a controller, a head including at least a magneto-resistive (MR) sensor to read information from a disk, and a heater to heat the head, wherein the controller may control the heater to implement differing method embodiments of the present invention.

The HDD may further include a disk to store the information.

To achieve the above and/or other aspects and advantages, embodiments of the present invention include at least one medium including computer readable code to implement differing method embodiments of the present invention.

Additional aspects and/or advantages of the invention will be set forth in part in the description which follows and, in part, will be apparent from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates a method of controlling a domain characteristic of an MR sensor, according to an embodiment of the present invention;
FIGS. 2A and 2B illustrate temperature variation characteristics of a MR sensor in a flying state and a non-flying state of a head, respectively according to an embodiment of the present invention;
FIG. 3 illustrates an HDD controlling a domain characteristic of an MR sensor, according to an embodiment of the present invention; and
FIG. 4 illustrates a system controlling the HDD, such as that of in FIG. 3, according to an embodiment of the present invention.

### DETAILED DESCRIPTION OF THE PREFERRED EMBODIMENTS

Reference will now be made in detail to embodiments of the present invention, examples of which are illustrated in the accompanying drawings, wherein like reference numerals refer to the like elements throughout. Embodiments are described below to explain the present invention by referring to the figures.

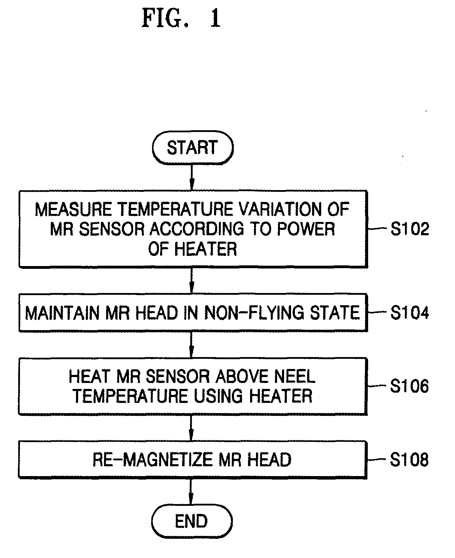

FIG. 1 illustrates a method of controlling a domain characteristic of a magneto-resistive (MR) sensor, according to an embodiment of the present invention.

Referring to FIG. 1, in operation S102, a correlation between power applied to a heater and temperature of the MR sensor may be measured in a non-flying state of a head of a hard disk drive (HDD). In detail, the heating characteristic of the heater, for applying heat to the MR sensor, and a temperature variation characteristic of the MR sensor, according to a caloric value of the heater in the non-flying state of the head, may be examined. Here, the heater for applying heat to the MR sensor may be installed inside the head, and in particular the heater may be installed so as to also control a flying height of the head.

The amount of heat required to heat the MR sensor when there is a flow of air, e.g., when the underlying disk is rotating, is much different from when there is not a flow of air, e.g., when the disk is not rotating and/or the MR sensor is unloaded from being above a disk. When the disk is rotating, the temperature of the MR sensor cannot be increased that much, even if the heater is controlled to apply heat to the MR sensor, due to the flow of air generated by the rotation of the disk. However, when the disk is not rotating, the temperature of the MR sensor can be easily increased up to a temperature required for annealing, since there is no flow of air.

According to an embodiment of the present invention, in an experiment, when 200mW of power was applied to a heater, the temperature of the MR sensor was able to be increased by 20°C in a flying state of the head, but the temperature of the MR sensor was able to be increased up to 200°C in a non-flying state of the head. Thus, when the flow of air is sufficiently blocked, the temperature of the MR sensor can be easily set to a temperature sufficient for annealing, e.g., 100°C.

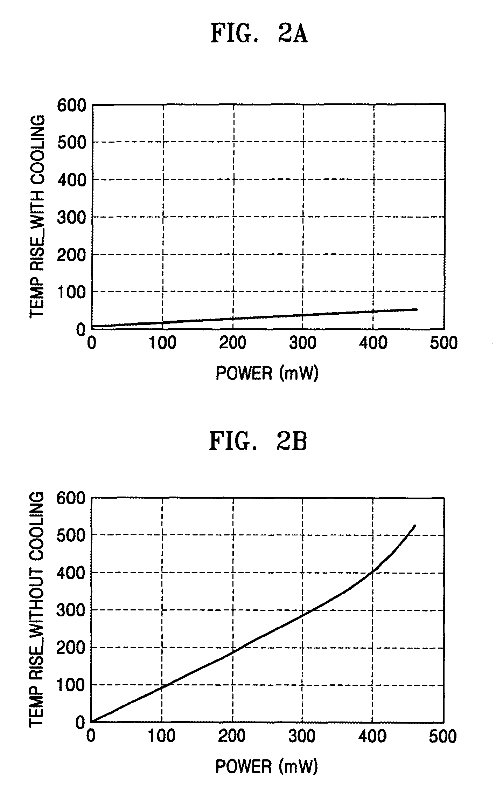

FIGS. 2A and 2B illustrate temperature variation characteristics of a MR sensor in a flying state and a non-flying state of the head, respectively, according to an embodiment of the present invention. As illustrated in FIGS. 2A and 2B, the temperature variation of the MR sensor is greater in the non-flying state of the head than in the flying state of the head.

Here, the heating characteristic of the heater indicates a correlation between power applied to the heater and heat generated by the heater. The temperature variation characteristic of the MR sensor indicates a correlation between the heat generated by the heater and the temperature of the MR sensor. Further, a temperature rising characteristic of the MR sensor can be measured by a resistance variation characteristic of the MR sensor. Since resistance of the MR sensor is inversely proportional to the temperature of the MR sensor, the temperature of the MR sensor can be measured using the variation of resistance.

Accordingly, the correlation between the power applied to the heater and the temperature of the MR sensor in the non-flying state of the head can be measured, in operation S102.

In operation S104, the head may be maintained in the non-flying state.

In operation S106, a demagnetization operation may be performed by increasing the temperature of the MR sensor above a temperature required for demagnetization, e.g., the Neel temperature, while applying power to a heater, e.g., the heater within the head, when the head is blocked from the flow of air generated by the rotation of the disk, either by being in a non-flying state and/or through the disk not rotating, or not rotating sufficiently to interfere with the heating of the MR sensor.

In operation S108, the MR sensor may be re-magnetized by cooling the MR sensor and applying a magnetic field to the MR sensor.

For example, as discussed in US Pat. No. 5,284,980, a ferromagnetic material film may be demagnetized by raising the temperature of the MR sensor above the Neel temperature, for example, and then cooling the MR sensor while an extemal magnetic field, for applying a single domain state to the MR sensor, is applied to the MR sensor.

A HDD may have a heater installed inside the head to control a head flying height, as discussed in US Pat. Publication No. 2004-240109 and US Pat. No. 5,461,526. Here, the heater can control an amount of protrusion of a write pole according to thermal pole tip protrusion (TPTP) of the head.

A metallic material may be used to form a write magnetic head in such a HDD, and a nonmetallic material may be used to form a slider supporting the magnetic head, for example. While writing data, Joule heat may be generated by a write current through a coil, for example. In this case, a portion surrounding the pole is expanded due to a thermal expansion coefficient difference between metal/nonmetal, and this is called a TPTP phenomenon. Due to the TPTP phenomenon, a head flying height, which is the distance between the head and the disk, can be controlled.

The control of the head flying height using a head TPTP characteristic is called flying on demand (FOD), and such a heater used for this purpose is called an FOD heater. The head flying height can be determined by atmospheric pressure and the amount of protrusion of the write pole.

A heater installed adjacent to an MR sensor and a head having separate layers for electrically separating the heater have further been discussed in US Pat. Publication No. 2004-240109, for example.

However, since the purpose of the FOD heater, as discussed in US Pat. Publication No. 2004-240109, is only for controling the head flying height, the heater operates during flying state of the head. In the contrast, according to an embodiment of the present invention, temperatures suitable for demagnetizing the MR sensor can be easily obtained by heating the FOD heater in the head non-flying state.

The head non-flying state can be implemented by parking the head. In general, if the head is parked, the disk stops rotating. Regardless, if the head is parked in an area outside the disk, the parked head may not be sufficiently influenced by the flow of air even if the disk rotates, and thus the annealing can still be performed regardless of the rotation of the disk.

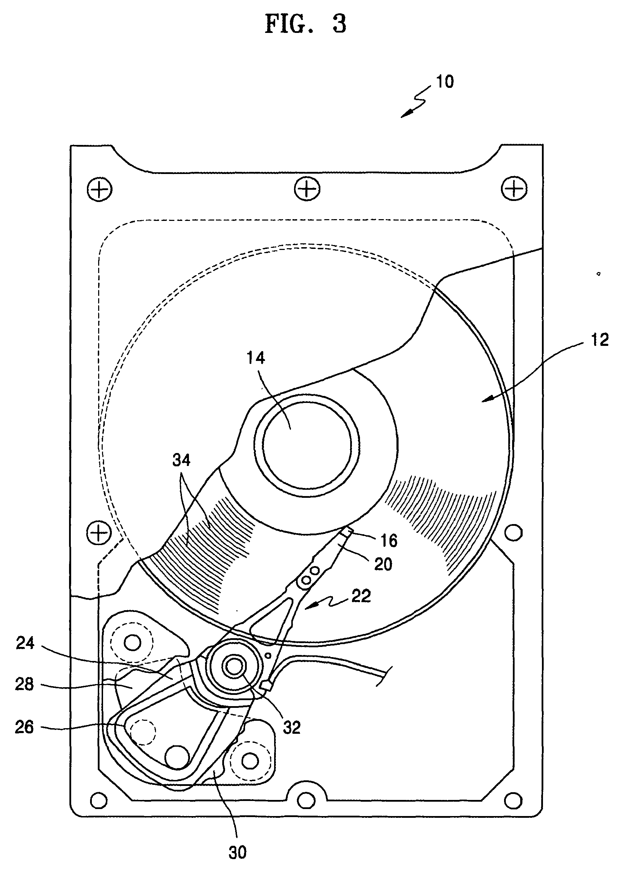

FIG. 3 illustrates an HDD 10, according to an embodiment of the present invention.

Referring to FIG. 3, the HDD 10 may include at least one disk 12 rotatable by a spindle motor 14 and a head 16 located adjacent to a surface of the disk 12.

The head 16 can read and/or write information from/to the disk 12 by sensing a magnetic field formed along portions of the disk 12 or by magnetizing a portion of the disk 12. Typically, the head 16 can cover all areas of the disk surface. Though a single head unit 16 is illustrated in FIG. 3, the head 16 may further include separate write and read heads. The read head may be made of a magneto-resistive (MR) sensor. In addition, as noted above, the head 16 may include an FOD heater, therein, for controlling a flying height of the head 12, noting that alternative embodiments are equally available.

The head 16 may be combined with a slider 20, with the slider 20 generating an air bearing between the head 16 and the surface of the disk 12 as the disk 12 rotates with sufficient speed. The slider 20 may be combined with a head gimbal assembly (HGA) 22, and the HGA 22 may, correspondingly, be attached to an actuator arm 24 having a voice coil 26. The voice coil 26 may be located adjacent to a magnetic assembly 28 making up a voice coil motor (VCM) 30. Current supplied to the voice coil 26 may generate torque that rotates the actuator arm 24 around a bearing assembly 32, such that the rotation of the actuator arm 24 moves the head 16 across the disk 12.

Information may typically be stored in concentric tracks on the disk 12, and, in general, each track 34 may include a plurality of sectors. Further, each sector may include a data field and an identification field. The identification field may be made up of gray code for identifying sectors and tracks (cylinders). Accordingly, the head 16 may move across the disk 12 to read and/or write information from/to different tracks on the disk. Here, it is noted that altemative embodiments are equally available, and embodiments of the present invention should not be limited to the above.

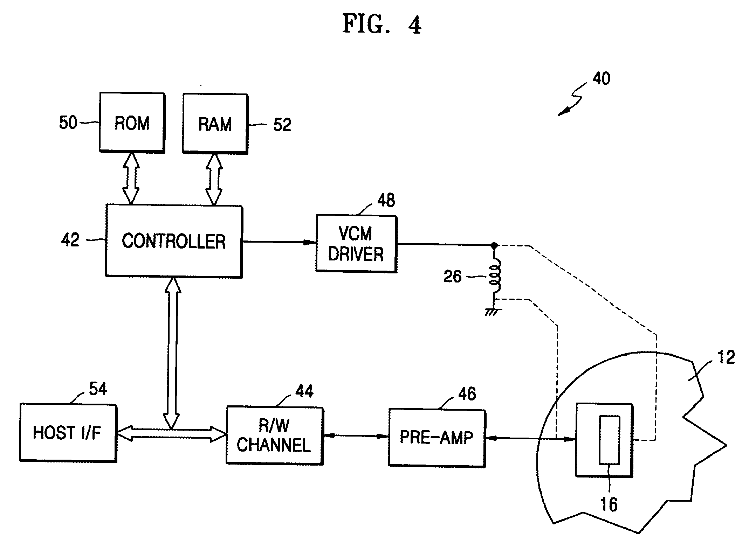

FIG. 4 illustrates system 40 for controlling a HDD 10, such as that illustrated in FIG. 3. Referring to FIG. 4, the system 40 may include a controller 42 combined with the head 16 through a read/write (R/W) channel circuit 44 and a pre-amplifier circuit 46. The controller 42 may be embodied by a digital signal processor (DSP), a microprocessor, or a micro-controller, for example. The controller 42 may provide a control signal to the R/W channel circuit 44 to read information from the disk 12 or write information to the disk 12. Further, the information may typically be transmitted from the RNV channel circuit 44 to a host interface circuit 54. The host interface circuit 54 may include a buffer memory and a control circuit allowing the HDD 10 to interface with a system such as a personal computer, noting again that alternative embodiments are equally available.

The controller 42 may be combined with a VCM driver circuit 48 supplying a driving current to the voice coil 26, with the controller 42 supplying a control signal to the VCM driver circuit 48 to control activation of a VCM and movement of the head 16.

The controller 42 may further be combined with a nonvolatile memory 50, such as a read only memory (ROM), a flash memory, etc., and a random access memory (RAM) 52, for example. The memory devices 50 and 52 may store therein commands and data used by the controller 42 to execute software routines, for example. Such software routines may merely be computer readable code and include execution codes for implementing processes, such as the annealing process to control the domain characteristic of the MR sensor.

In an operation for controlling the domain characteristic of the MR sensor, the controller 42 may cause the head 16 to park, for example, in response to a control command, e.g., as implemented by computer readable code. After the head 16 is parked, the controller 42 may apply power to the FOD heater, for example, to heat the MR sensor to a temperature suitable for the annealing. The controller 42 may then cause a magnetic field for magnetizing the MR sensor to be applied to the MR sensor and, thereafter, establish a single domain state in the MR sensor by cooling the MR sensor.

Embodiments of the present invention may be realized at least as a method, an apparatus, and/or a system. When embodiments of the present invention are realized as computer readable code, e.g., software, components of the present invention may, for example, be embodied as separate code segments for implementing desired operations, noting that altemative embodiments are equally available. The computer readable code, e.g., program(s) and/or code segments, can be stored/transferred by a medium, such as a processor readable recording medium, as well as be transmitted through the medium, e.g., as computer data signals combined with a carrier. The medium may be any data storage device that can store/transfer/transmit data that can be thereafter read by a computer system, for example. Examples of the media include electronic circuits, semiconductor memory devices, read-only memory (ROM), flash memory, erasable ROM, floppy disks, optical disks, hard disks, optical fiber media, and RF networks, for example. As another example, when the computer readable code includes computer data signals the medium may include any signal which can be propagated via transmission media such as electronic network channels, optical fibers, air, electronic fields, RF networks, again noting that altemative embodiments are equally available.

As described above, when using a method of controlling a domain characteristic of an MR sensor, according to embodiments of the present invention, annealing can be performed in a fully assembled HDD by obtaining temperatures suitable for annealing the MR sensor using a heater, e.g., a heater installed inside the corresponding head.

The method of controlling a domain characteristic of an MR sensor can also, equally, be performed before an HDD is assembled, as well as in a fully assembled HDD. Thus, domain characteristic can be easily controlled in an HDD manufacturing process without the need of separate high-temperature chambers for annealing.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method of controlling a domain characteristic of a magneto-resistive (MR) sensor included in a head (16) within a hard disk drive (10) (HDD), the method comprising:
applying heat to the MR sensor suitable for demagnetizing the MR sensor; and
cooling the MR sensor while applying a magnetic field for magnetizing the MR sensor.

2. The method of claim 1, further comprising preventing a cooling of the head (16) by a disk (12) in the HDD (10) during the heating the MR sensor.

3. The method of claim 2, wherein the cooling of the head (16) further comprises maintaining the head (16) in a non-flying state.

4. The method of claim 5, wherein the cooling of the head (16) further comprises maintaining the disc (112) below a speed that would prevent the application of heat to the MR sensor from demagnetizing the MR sensor.

5. The method according to one of claims 2 to 4, wherein the cooling of the head (16) further comprises stopping rotation of the disc (12).

6. The method according to one of claims 2 to 5, wherein the cooling of the head (16) further comprises parking the head (16) outside a circumference of the disk (12).

7. The method according to one of claims 1 to 6, wherein the head (16) comprises a heater to perform the applying of heat to the MR sensor.

8. The method according to one of claims 1 to 7, wherein heat is applied to the MR sensor suitable for demagnetizing the MR sensor by driving a heater in the head (16).

9. The method according to one of claims 1 to 8, wherein the head is installed in the HDD (10).

10. The method according to one of claims 1 to 8, wherein the head is separate from the HDD (10)

11. A hard disc drive (HDD) comprising:
a controller (42);
a head (16) comprising at least a magneto-resistive (MR) sensor to read information from a disc (12); and
a heater to heat the head, wherein the controller (42) is configured to control the heater according to the method of one of claims 1 to 10.

12. The HDD of claim 11, further comprising the disc (12) to store the information.

13. Computer program product, comprising one or more computer readable media having computer executable instructions for performing control steps of the method according to one of claims 1 to 10.
